# FASCICULE DE BREVET EUROPEEN

(11) **EP 2 340 751 B1**
(45) Date de publication et mention de la délivrance du brevet: **24.04.2013**
(21) Numéro de dépôt: 09291003.3
(22) Date de dépôt: 31.12.2009
(51) Int. Cl.: A47J 36/20, A47J 45/07, A47J 45/06

(54) **Ustensile à manipulation simplifiée**
Gerät mit vereinfachter Handhabung
Utensil with simplified handling

(43) Date de publication de la demande: 06.07.2011
(73) Titulaire: Mastrad, 75012 Paris (FR)
(72) Inventeur: Venot, Marc, 93400 Saint Ouen (FR); Lion, Mathieu, 75020 Paris (FR)
(74) Mandataire: Plaçais, Jean Yves

(56) Documents cités:
- WO-A2-2008/036785
- GB-A- 2 451 142
- US-A1- 2006 070 944

## Description

L'invention concerne un ustensile à manipulation simplifiée.

La cuisine implique l'utilisation de divers ustensiles pour réaliser divers types de cuissons.

Ces cuissons diverses impliquent dans certains cas l'utilisation de l'eau comme vecteur thermique. Pour cela, il est fréquent d'utiliser un ustensile qui comprend une base qui reçoit l'eau de cuisson, ainsi qu'un récipient qui reçoit les aliments à cuire.

Un tel ustensile est divulgué dans le document WO 2008/036785.

Une fois la cuisson terminée, l'eau doit être évacuée. L'opération qui vise à évacuer cette eau est en général complexe et peu pratique.

En effet, cette opération demande une certaine précision pour ne pas évacuer les aliments en même temps que l'eau de cuisson, alors que l'ustensile est brûlant, ce qui rend très difficile ce geste.

Des solutions ont été proposées pour palier ce défaut. Elles consistent principalement à munir la base de tétons périphériques, et le récipient d'encoches correspondantes.

Cela permet d'établir une liaison avec un degré de liberté en rotation entre la base et le récipient. Il devient ainsi possible d'évacuer l'eau sans risquer de renverser les aliments cuits.

Cependant, cette solution est très peu pratique à l'usage. En effet, le montage du récipient dans la base est malaisé et relativement peu stable.

En outre, cette solution nécessite une conformation très particulière des éléments de l'ustensile, ce qui grève la production de ces ustensiles, tant du point de vue matériel que de la complexité de production.

L'invention vient améliorer la situation.

À cet effet, l'invention propose un ustensile comportant une base comprenant un fond et une paroi périphérique reliée audit fond de manière à définir un espace, ladite paroi présentant un bord sensiblement opposé audit fond ainsi que deux ouvertures traversantes au voisinage dudit bord et sensiblement opposées l'une à l'autre.

Cet ustensile comprend en outre un récipient adapté pour être logé dans ledit espace et présentant deux tétons périphériques sensiblement opposés l'un à l'autre et adaptés pour être chacun reçu dans une ouverture respective desdites ouvertures traversantes.

L'une au moins des ouvertures traversantes débouche sur le bord en une encoche de réception pour un desdits tétons, et en ce que l'ustensile comprend en outre un dispositif de préhension muni d'une portion d'appui adaptée pour recouvrir au moins en partie le téton qu'elle reçoit, et un élément de fixation adapté pour maintenir le dispositif de préhension dans la position où le téton est au moins partiellement recouvert.

Ce dispositif est particulièrement avantageux car il est plus simple à fabriquer et à utiliser, et il est plus fiable.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue éclatée d'un premier mode de réalisation d'un ustensile selon l'invention,
- la figure 2 représente une vue en perspective du montage de l'ustensile de la figure 1,
- la figure 3 représente une vue en perspective de l'évacuation d'une eau de cuisson avec l'ustensile des figures 1 et 2,
- la figure 4a et la figure 4b représentent des vues de dessus de l'ustensile de la figure 1 dans deux positions de la poignée,
- la figure 5 représente une vue en perspective d'un deuxième mode de réalisation d'un ustensile selon l'invention,
- la figure 6 représente une vue en perspective de la base de l'ustensile de la figure 5,
- la figure 7 représente une vue en perspective de côté d'un premier récipient de l'ustensile de la figure 5,
- la figure 8 représente une vue en perspective de dessous du récipient de la figure 7,
- la figure 9 représente une vue en perspective éclatée d'une poignée de l'ustensile de la figure 5,
- la figure 10 représente une vue en perspective d'une première étape du montage de l'ustensile de la figure 5,
- la figure 11 représente une vue en perspective d'une deuxième étape du montage de l'ustensile de la figure 5, et
- la figure 12 représente une vue en perspective de l'évacuation d'une eau de cuisson avec l'ustensile des figures 1 et 2.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

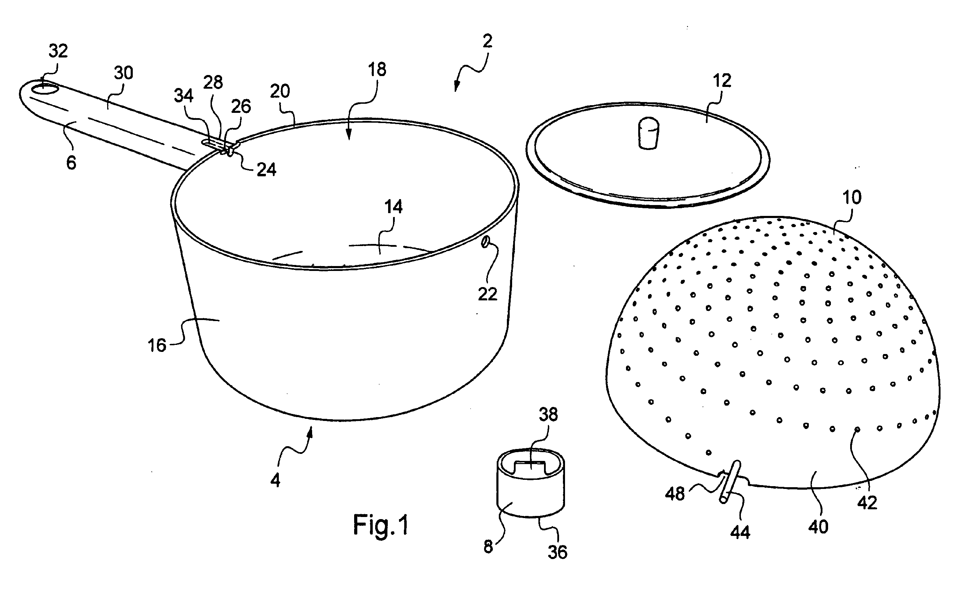

La figure 1 représente une vue en perspective éclatée d'un ustensile 2 selon l'invention. Dans l'exemple décrit ici, l'ustensile 2 comprend une base 4 munie d'une poignée 6, un manchon 8, une passoire 10 et un couvercle 12.

Dans l'exemple décrit ici, la base 4 prend la forme d'une casserole. Plus précisément, la base 4 comporte un fond 14 essentiellement plat et sensiblement circulaire, sur lequel s'appuie une paroi périphérique 16 sensiblement droite et épousant les contours du fond 14.

Ensemble, le fond 14 et la paroi 16 définissent un espace 18 pour recevoir des aliments à cuire, ou un récipient.

Dans le mode de réalisation décrit ici, le fond 14 et la paroi 16 sont réalisés à partir d'une même plaque, par emboutissage. Cependant, dans d'autres modes de réalisation, le fond 14 et la paroi 16 peuvent être reliés par soudage par exemple.

En outre, de nombreuses autres formes peuvent être retenues pour le fond 14 et la paroi 16. Par exemple le fond 14 peut être sensiblement carré, elliptique ou selon toute autre forme fermée, et la paroi 16 peut être réalisée non droite.

D'une manière générale, le fond 14 peut également être bombé, c'est-à-dire convexe ou concave, et la paroi 16 peut être reliée au fond 14 à l'intérieur de celui-ci, et non pas le long de sa périphérie comme c'est le cas dans l'exemple décrit ici.

L'essentiel est que le fond 14 définit une surface de réception, et la paroi 16 délimite une surface de contenance.

L'extrémité supérieure de la paroi 16 définit un bord 20. Le bord 20 est sensiblement opposé au fond 14 par rapport à la paroi. Le bord 20 est sollicité notamment lors de l'évacuation d'un liquide ou d'aliments reçus dans l'espace 18.

Dans l'exemple décrit ici, la paroi 16 présente deux ouvertures 22 et 24 dans le voisinage du bord 20. Les ouvertures 22 et 24 sont réalisées de manière sensiblement opposées l'une à l'autre.

Plus précisément, le fond 14 ayant une forme sensiblement circulaire, et la paroi 16 épousant cette forme, les ouvertures 22 et 24 sont réalisées dans la paroi 16 de sorte qu'elles sont sensiblement diamétralement opposées.

L'ouverture 24 est réalisée dans la paroi en regard de la poignée 6 qui sert de dispositif de préhension avec le manchon 8. La poignée 6 étant fixée sur la paroi 16 après que les ouvertures 22 et 24 ont été réalisées, il est également possible que c'est la poignée qui est en fixée en regard de l'ouverture 24.

Dans le mode de réalisation décrit ici, l'ouverture 22 est réalisée très proche du bord 20, à 10 mm de celui-ci, et avec un diamètre de 8 mm, de sorte qu'elle ne débouche pas sur celui-ci. Les ouvertures 22 et 24 sont réalisées à une distance sensiblement égale du bord 20.

Dans d'autres modes de réalisation, cette ouverture pourrait être réalisée à une distance plus importante du bord 20, jusqu'à la moitié de la distance entre le bord 20 et le fond 14.

L'ouverture 24 est différente de l'ouverture 22, et débouche via un élargissement 26 sur le bord 20 pour former une encoche 28. Le débouchement de l'encoche 26 est par rapport à l'ouverture 22.

Dans l'exemple décrit ici, la poignée 6 est réalisée sous la forme d'un embouti 30 allongé dont une extrémité est fixée sur la paroi 16. À l'autre extrémité, l'embouti 30 présente un évidement 32 pour pendre la base 4 à un crochet.

Du côté de l'extrémité fixée à la paroi 16, l'embouti 30 présente une rainure 34, qui est disposée sensiblement en regard de l'ouverture 22.

L'extrémité de l'embouti 30 est fixée contre la paroi 16 à une distance du bord 20 qui est supérieure à la hauteur de l'élargissement 26. Ainsi, lorsque la base 6 est posée sur une surface plane, la surface supérieure de la poignée 6 rase le niveau de l'élargissement 26 de l'encoche 28.

Le fond14 et la paroi 16 peuvent être réalisés en "tri-ply" (superposition de trois couches de matières particulièrement utilisée pour le chauffage par induction), acier, aluminium, acier inoxydable, aluminium anodisé ou en acier moulé.

La poignée 6 peut être réalisée en acier, acier inoxydable, acier moulé, alliage, aluminium ou tout autre matériau résistant à la chaleur et être recouverte ou non d'un grip souple.

La poignée 6 peut être fixée sur la paroi 16 par soudure, vissage, rivetage, collage, clipage ou toute autre technique d'assemblage.

Le manchon 8 présente une forme correspond sensiblement à celle de la poignée 6 sur laquelle il vient s'emmancher.

Le manchon 8 comprend donc un corps sensiblement cylindrique 36, qui est muni à une extrémité axiale d'une languette 38. La languette 38 présente avantageusement une largeur légèrement inférieure à la largeur de l'encoche 28.

Ainsi, lorsque le manchon 8 est emmanché sur la poignée 6, la languette 38 peut venir se loger dans l'élargissement 26 de l'encoche 28, juste au dessus de l'ouverture 22 et de la rainure 36 qu'elle obstrue.

La passoire 10 est le récipient qui est destiné à recevoir les aliments que l'on souhaite cuire. Elle présente un corps 40 qui a forme semi-sphérique ouverte.

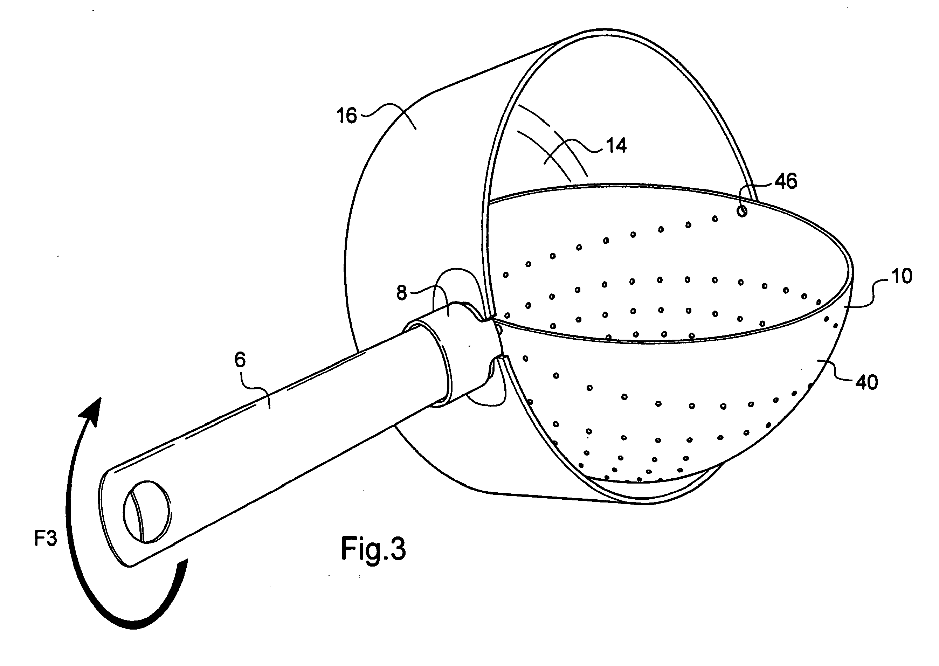

Le corps 40 est percé d'une multitude de trous 42 pour permettre à l'eau de pénétrer, et deux tétons [ou tourillons] 44 et 46 dont un seul, le téton 44, est visible sur la figure 1. Le téton 46 peut être vu en partie sur la figure 3.

On notera que, si l'on ne réalise pas les trous 42 dans le corps 40, on obtient avantageusement un bain-marie.

Le téton 44 a une forme sensiblement cylindrique et un diamètre correspondant à celui de la rainure 34, de sorte que cette dernière peut le recevoir. Le téton 46 a une forme sensiblement cylindrique et un diamètre correspondant à celui de l'ouverture 22, de sorte qu'il peut être introduit dans cette dernière.

Le corps 40 présente également une découpe 48 au niveau du téton 44, qui présente une forme sensiblement identique à celle de l'élargissement 26 de l'encoche 28 de la paroi 16.

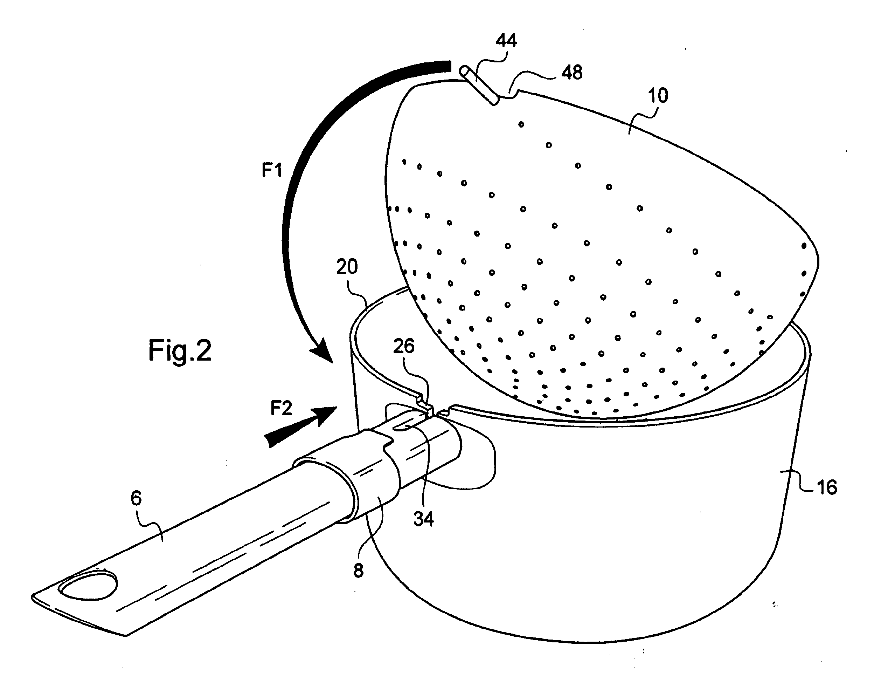

La figure 2 montre un exemple de montage du récipient 10 dans la base 4. Dans un premier temps, le téton 46 est introduit dans l'ouverture 22.

Ensuite, selon un mouvement représenté par une flèche F1, le récipient 10 est introduit dans l'espace 18 en l'abaissant, jusqu'à ce que le téton 44 vienne se loger dans la rainure 34.

La forme de l'encoche 28 facilite ce mouvement, et le téton 44 est dans sa position finale reçu dans l'ouverture 24 et dans le prolongement de celle-ci dans la rainure 34. Enfin, le manchon 8 peut être emmanché sur l'embouti 30 jusqu'à recouvrir la rainure 34 selon un mouvement représenté par une flèche F2.

Une fois le récipient 10 monté sur la base 4 et le manchon 8 emmanché sur la poignée 6, on obtient un ustensile 2 conforme à la figure 3.

Comme le téton 44 est reçu dans l'ouverture 24 en étant recouvert par le manchon 8, et le téton 46 dans l'ouverture 22, le récipient 10 est dans une relation de rotation par rapport à la base 4.

Ainsi, si la base 4 est déplacée en rotation selon une flèche F3, la base 4 va été tournée progressivement autour d'un axe sensiblement horizontal, et le récipient 10 va rester en place sous l'effet de la gravité.

Le résultat est que la base 4 peut être vidée de l'eau qu'elle contient sans que cela pose de problème pour les aliments que contient le récipient 10.

En outre, grâce à l'ustensile selon l'invention, cela peut être réalisé d'une seule main, et sans risquer de se brûler en s'approchant de la base 4.

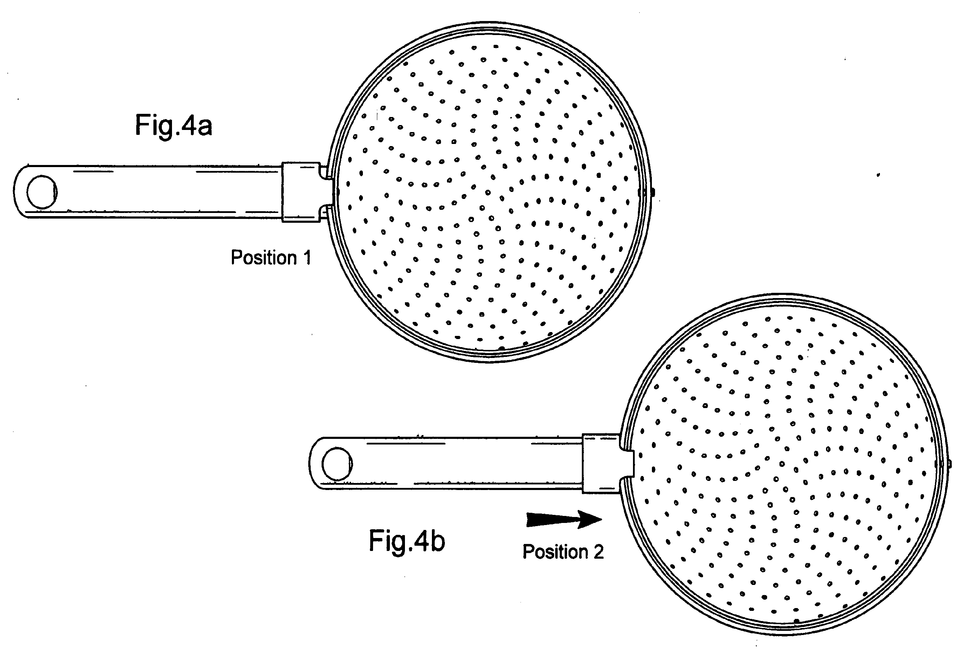

Les figures 4a e 4b montrent des vues de dessus de l'ustensile dans deux configurations.

Dans la configuration de la figure 4a, le manchon 8 est enfoncé au même niveau que ce qui est représenté sur la figure 3. Dans cette configuration, le récipient 10 est libre en rotation.

Dans la configuration de la figure 4b, le manchon 8 est emmanché légèrement plus loin. Il en résulte que la languette 38 du manchon 8 vient pénétrer la découpe 48 du récipient 10, ce qui vient bloquer la rotation de ce dernier par rapport à la base 4.

Ainsi, toujours à l'aide d'une seule main et sans risquer de ce brûler, l'utilisateur peut faire passer l'ustensile d'une position verrouillée dans laquelle la base 4 et le récipient 10 sont solidaires vers une position libre où l'utilisateur peut évacuer l'eau.

On notera que l'ustensile 2 est ambidextre, et que les ouvertures 22 et 24 pourraient être légèrement désaxées, c'est-à-dire opposées l'une à l'autre d'une manière générale, mais non diamétralement.

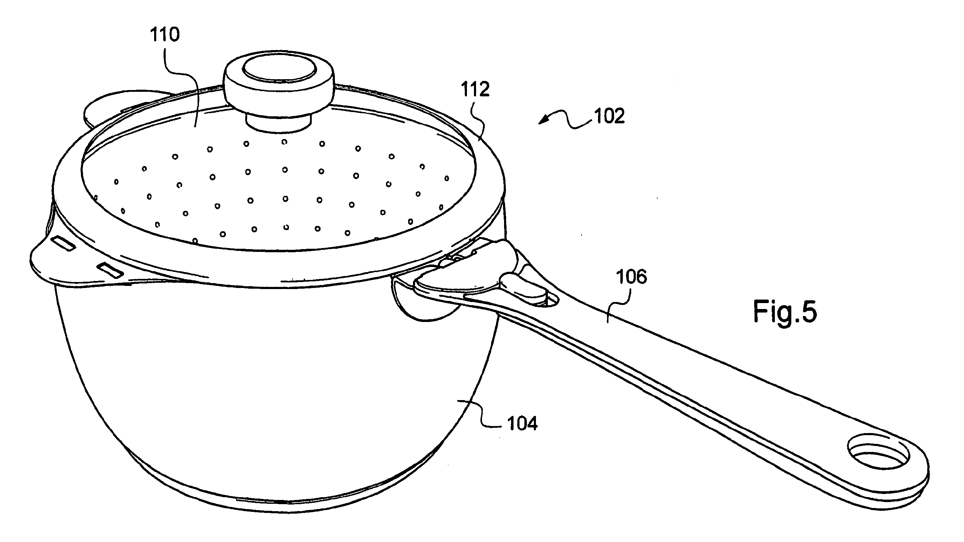

La figure 5 représente une vue en perspective d'un ustensile selon un deuxième mode de réalisation de l'invention.

L'ustensile 102 présente là encore une base 104, une poignée 106, un récipient 110 et un couvercle 112. Ce mode de réalisation ne présente pas de manchon du fait d'un fonctionnement différent.

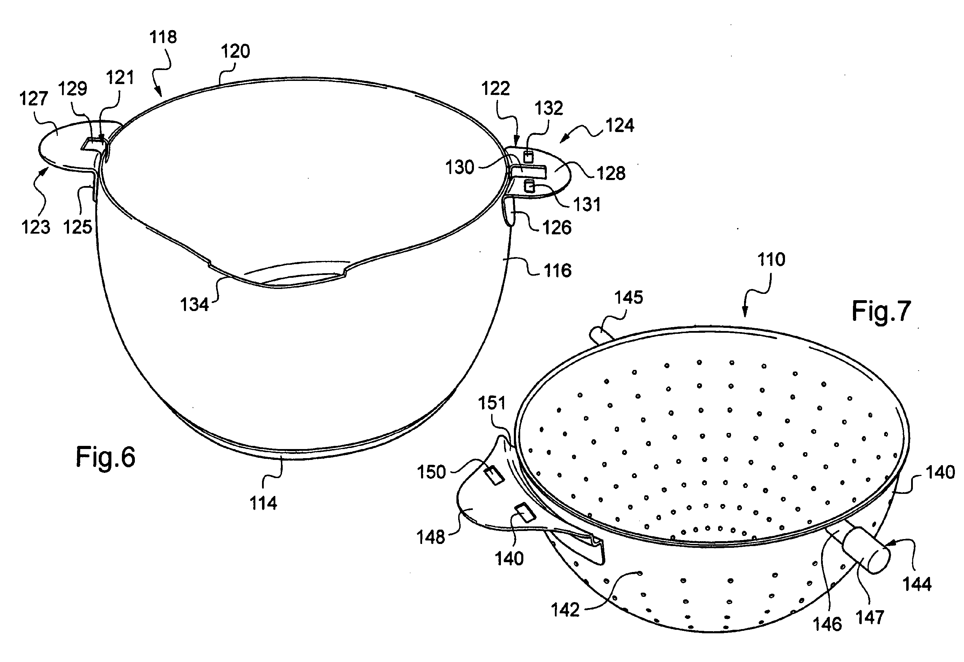

La figure 6 représente une vue en perspective de la base 104. De manière similaire à la base 4, la base 104 comprend un fond 114 relié à une paroi 116 qui définissent ensemble un espace 118.

La paroi 116 est légèrement différente dans sa forme de la paroi 16, et présente une forme légèrement bombée, de sorte que la base 104 ressemble à un saladier.

Comme cela a été mentionné plus haut pour la paroi 16, le fond 114 et la paroi 116 peuvent être réalisées de différentes manières et avec différentes formes.

La paroi 116 comporte également un bord 120 opposé au fond 114, ainsi que deux ouvertures 121 et 122. Dans ce deuxième mode de réalisation, les ouvertures 121 et 122 débouchent sur le rebord 120 pour former des encoches. L'encoche 121 est réalisée avec une largeur plus importante que celle de l'encoche 122.

La base 114 comprend également deux anses 123 et 124 qui sont rapportées sur la paroi 116, respectivement en regard de l'encoche 121 pour l'anse 123, et en regard de l'encoche 122 pour l'anse 124.

L'anse 123 (respectivement124) a une forme de coin, une première surface 125 (respectivement 126) assurant la fixation à la paroi 116 par soudure, vissage, rivetage, collage ou toute autre technique d'assemblage, et une deuxième surface 127 (respectivement 128) sensiblement perpendiculaire à la première surface 125 (respectivement 126) étant dans le prolongement du bord 120, sensiblement au même niveau que celui-ci.

La deuxième surface 127 de l'anse 123 présente une découpe 129 dont la largeur correspond sensiblement à la largeur de l'encoche 121 de la paroi 116.

La deuxième surface 128 de l'anse 124 présente une découpe 130 dont la largeur correspond sensiblement à la largeur de l'encoche 122 de la paroi 116. Elle présente également deux découpes 131 et 132 disposées de part et d'autre de la découpe 130, dont le rôle sera explicité plus bas.

Enfin, à peu près à mis distance des deux anses 123 et 124, le bord 120 comprend un bec 134 qui peut servir à faciliter le versement d'un liquide contenu dans l'espace 118.

La figure 7 représente une première vue en perspective du récipient 110. Dans l'exemple décrit ici, le récipient 110 est assez proche du récipient 10 en ce qu'il comprend un corps 140 percé de trous 142 pour en faire une passoire, ainsi que des tétons 144 et 145.

Ici encore, il sera possible d'omettre les trous 142 pour obtenir un bain-marie.

Le téton 144 présente une première partie 146 cylindrique qui saille du corps 140, et une deuxième partie 147 également cylindrique en prolongement de la première partie 146.

La première partie 146 présente un diamètre sensiblement égal à celui de l'ouverture 122, et la deuxième partie 147 présente un diamètre sensiblement égal à celui de la découpe 130.

Le téton 145 est pour sa part formé d'une seule partie cylindrique, dont le diamètre correspond sensiblement à celui de l'ouverture 121.

Avantageusement, le diamètre des ouvertures 121 et 122 peuvent être choisis pour être sensiblement égaux, ce qui permet une fabrication plus aisée du récipient 110. En effet, les ouvertures 121 et 122 peuvent être réalisées dans une seule et même opération, comme le téton 145 et la première partie 146 du téton 144.

La conformation des tétons 144 et 145 permet de simplifier le montage du récipient 110 dans la base 104. En effet, comme on le verra plus bas, l'ustensile de ce mode de réalisation n'est pas ambidextre.

Dans ce contexte, la taille différente des tétons 144 et 145 permet de détromper l'utilisateur lors du positionnement du récipient 110 dans la base 104.

Le récipient 110 comprend également une pièce 148 de forme générale coudée, comme les anses 123 et 124, et qui est agencée le long du corps 140 entre les tétons 144 et 145, en correspondance du bec 134 de la base 104.

La pièce 148 est disposée entre les tétons 144 et 145 de telle manière que, lorsque le récipient 110 est reçu dans l'espace 118 de la base 104, la pièce 148 vient se reposer sur le bec 134. L'appui de la pièce 148 sur le bec 134 interdit ainsi un sens de rotation du récipient 110 par rapport à la base 104, tandis que cet appui est inopérant dans l'autre sens de rotation.

La pièce 148 présente également deux découpes 149 et 150, réalisées de manière similaire aux découpes 131 et 132 de l'anse 124.

La pièce 148 est réalisée avec un décalage 151 au niveau du coude. Ainsi, lorsque la pièce 148 est reliée à la paroi 116, il subsiste un espace correspondant au décalage 151 entre l'extrémité du bord 120 de la paroi 116 d'une part et la pièce 148 d'autre part. Cela permet notamment de loger le couvercle 112 avec une bonne étanchéité, que la passoire 10 soit dans la base 104 ou non.

On notera par ailleurs que les découpes 149 et 150 sont réalisées dans une partie de la pièce 148 qui ne peut pas être recouverte par le couvercle 112, comme cela apparaît le mieux sur la figure 5.

Lorsque le récipient 110 est reçu dans la base 104 et que le couvercle 112 ferme l'ustensile 102, l'intérieur de l'ustensile 102 communique donc avec l'extérieur via les découpes 149 et 150, comme celles-ci sont réalisées dans une partie de la pièce 148 qui recouvre le bec 134 entre l'extrémité de celui-ci et l'extrémité du couvercle 112.

Ainsi, lorsque la pièce 148 repose sur le bec 134 et que le couvercle 112 ferme l'ensemble, les découpes 149 et 150 permettent l'évacuation de la vapeur depuis l'intérieur de l'ustensile 102 qui est fermé par le couvercle 112.

Cela assure un chemin aisé d'échappement de la vapeur et évite un échappement par les ouvertures 121 et 122, et donc une brûlure de l'utilisateur qui manipule l'ustensile 102.

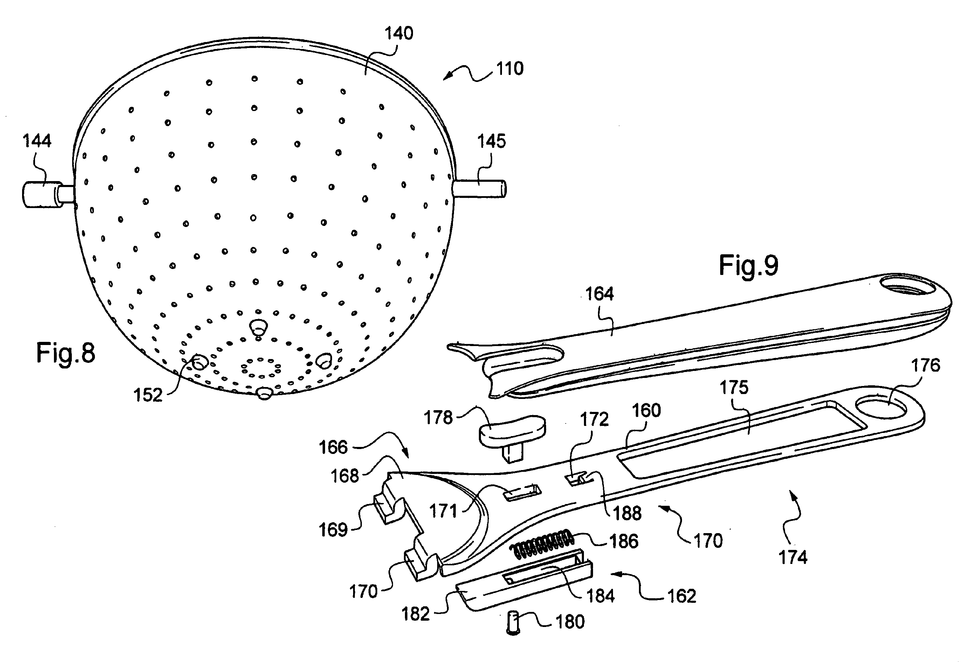

Comme on peut le voir sur la figure 8, le récipient 110 comprend en outre quatre pieds 152 au niveau du fond du corps 140, ce qui permet de poser le récipient 110 sur une surface plane sans que celui-ci ne se renverse.

La figure 9 représente une vue en perspective éclatée de la poignée 106 de l'ustensile 102. La poignée 106 est amovible, et prévue pour permettre de manipuler la base 104 et le récipient 110, tant séparément que lorsqu'ils sont reliés.

La poignée 106 comprend une âme 160, un mécanisme de verrouillage 162 et un revêtement 164.

L'âme 160 est réalisée en métal, par exemple en acier pour coulage sous pression et présente une forme générale allongée. Du côté de la poignée 106 qui sert de liaison avec la base 104 ou le récipient 110, l'âme comprend une région de liaison 166.

La région de liaison 166 comprend une portion emboutie 168 dont la forme est sensiblement complémentaire de celle de la deuxième partie 128 de l'anse 124, et de celle de la pièce 148.

En outre, deux doigts 169 et 170 saillent depuis l'extrémité de la portion emboutie 168. Les doigts 169 et 170 sont dimensionnés et agencés pour venir en prise dans les découpes 131 et 132 et 149 et 150.

À la suite de la région de liaison 166, l'âme 160 comprend une région de verrouillage 170. La région de verrouillage 170 est la portion de l'âme 160 qui va coopérer avec le mécanisme de verrouillage 162 pour maintenir la poignée 106 et la base 104 ou le récipient 110 dans une liaison solidaire.

La région de verrouillage 170 comprend deux trous 171 et 172. Le trou 171 sert à l'interaction entre l'âme 160 et le mécanisme de verrouillage 162, et le trou 172 sert à la liaison avec le revêtement 164 et à l'appui du ressort 186.

Dans le prolongement de la région de liaison 166, l'âme 160 comprend enfin une région de préhension 174, qui comprend deux évidements 175 et 176.

L'évidement 175 permet d'alléger la poignée 106 et de logement pour une partie du revêtement 164. L'évidement 176 est similaire à l'évidement 32 et sert à pendre la poignée à un crochet.

Le mécanisme de verrouillage 162 comprend un bouton 178 solidaire d'une tige 180, ainsi qu'un bras 182 qui comprend une gorge 184 qui loge un ressort 186.

Le fonctionnement est le suivant : lorsque les doigts 169 et 170 sont introduits dans les découpes 131 et 132 (respectivement les découpes 149 et 150), par un mouvement du haut vers le bas, le bras 182 vient en contact avec une extrémité de la deuxième partie 128 (respectivement de la pièce 148).

Au fur et à mesure que les doigts 169 et 170 progressent et que la poignée 106 est baissée, le bras 182 est sollicité dans la direction de résistance du ressort 186, qu'il comprime. Le ressort 186 est limité dans son déplacement par une butée 188 issue du trou 172.

Lorsque les doigts 169 et 170 sont engagés à fond et que la poignée 106 est totalement rabattue, alors l'extrémité de la deuxième partie 128 (respectivement de la pièce 148) est entièrement logée dans la partie emboutie 168, et le bras 182 repart alors violemment dans la direction opposée, sous l'effet du relâchement du ressort 186.

Le bras est alors situé en dessous l'extrémité de la deuxième partie 128 (respectivement de la pièce 148), tandis que les doigts 169 et 170 viennent en prise avec elle par le dessus, ce qui crée une liaison avec pincement.

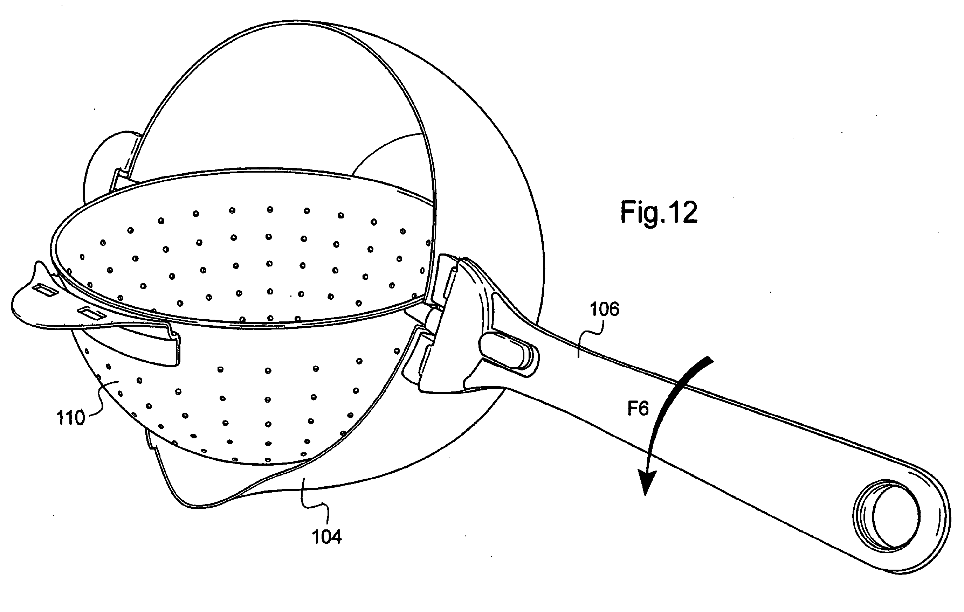

Lorsque le récipient 110 est reçu dans la base 104, la portion emboutie 168 vient recouvrir l'extrémité du téton 144, comme on peut le voir sur la figure 12.

La tige 180 est reliée solidairement avec le bras 182, ce qui permet de déverrouiller le mécanisme de verrouillage 162. En effet, il suffit de tirer sur le bouton 178 pour faire reculer le bras 182 en comprimant le ressort 186, jusqu'à ce que celui-ci ne soit plus sous l'extrémité de la deuxième partie 128 (respectivement de la pièce 148).

Il est alors aisé de détacher la poignée 106 en la relevant et en dégageant les doigts 169 et 170.

Le revêtement 164 est, dans l'exemple décrit ici, réalisé en silicone, ce qui permet d'obtenir une bonne prise, tout en offrant une excellente isolation thermique. Dans d'autres modes de réalisations, le revêtement 164 peut être réalisé en plastique, silicone, ou en métal.

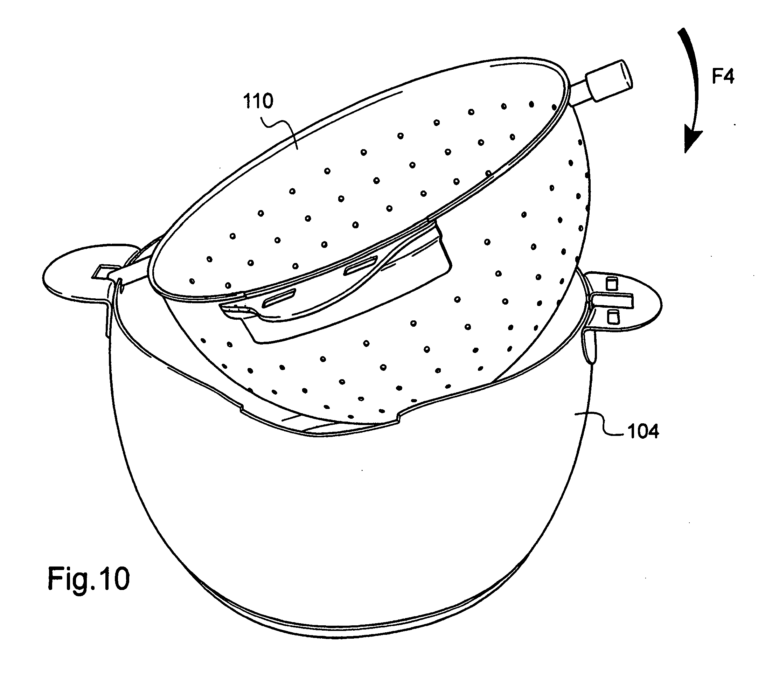

La figure 10 montre un exemple de mise en place du récipient 110 dans la base 104. Comme on peut le voir, il convient d'abord d'introduire le téton 145 dans l'encoche 129, jusqu'à ce qu'il soit logé en partie dans l'ouverture 121, et en partie sous la deuxième surface 127 de l'anse 123.

Ensuite, dans un mouvement selon une flèche F4, le récipient 110 peut être logé dans l'espace 118, le téton 144 se logeant dans l'encoche 130 de l'anse 124 et dans l'ouverture 122.

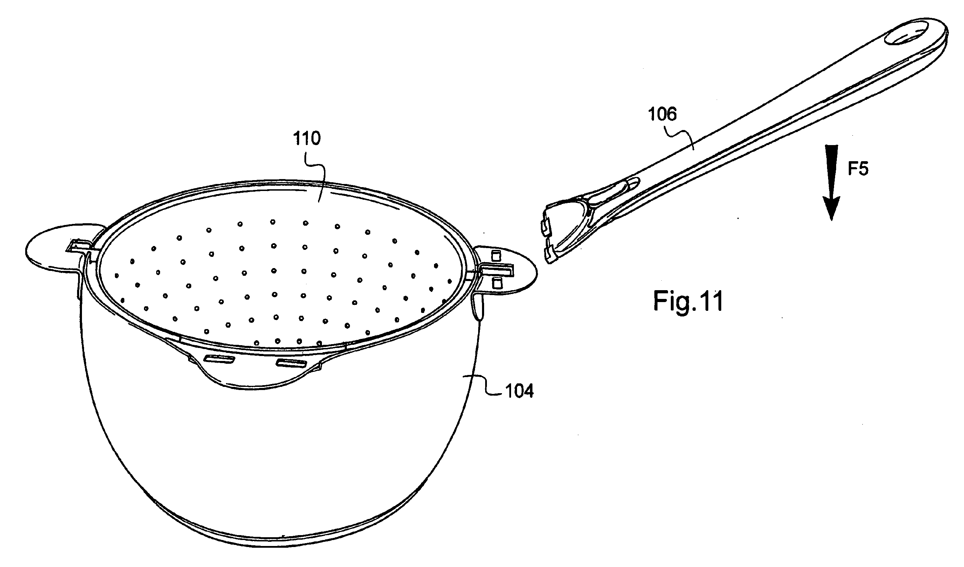

La figure 11 montre la mise en place de la poignée 106 sur l'ensemble base 104 et récipient 110. Comme précisé précédemment, on vient introduire les doigts 169 et 170 dans les découpes 131 et 132, et la poignée est abaissée selon une flèche F5, jusqu'à entendre un son d'encliquetage qui correspond au relâchement du ressort 186.

Enfin, la figure 12 représente l'utilisation de l'ustensile 102 pour évacuer l'eau. En effet, une fois la poignée 106 verrouillée, il suffit de la tournée selon une flèche F6 pour faire tourner la base 104, tandis que le récipient 110 reste droit du fait de la gravité.

En effet, le téton 144 étant maintenu au niveau de la poignée 106, et le téton 145 étant maintenu au niveau de la deuxième surface 127, la base 104 et le récipient 110 sont alors en relation de rotation selon l'axe passant par les tétons 144 et 145.

Enfin, si la poignée est tournée dans la direction opposée à la flèche F6, on notera que le récipient 110 et la base 104 restent solidaires, car la pièce 148 reste en appui sur le bec 134, ce qui permet de verser aisément le contenu du récipient 110 dans une assiette.

On notera que, si la pièce 148 est placée de manière opposée à ce qui a été montré ici, les sens mentionnés ci-dessus sont inversés, mais le fonctionnement reste le même.

En outre, bien que les exemples décrits ici concernent des poignées de forme générale allongée, ces poignées pourraient avoir une forme plus courte à la manière d'une anse, et être disposées symétriquement autour de la paroi, pour une utilisation comme faitout par exemple.

Bien que la base 4 ait été décrite sous la forme particulière d'une casserole, on doit comprendre que cette base 4 peut prendre la forme de tout autre récipient cylindrique à usage culinaire.

Outre les applications décrites ci-dessus, à titre d'exemple uniquement, on peut envisager de réaliser l'invention sous la forme d'un cuit-vapeur ou encore d'une friteuse, entre autres choses.

La description qui précède a été réalisée en rapport à deux modes de réalisation distincts. L'homme du métier saura reconnaître que de nombreuses variantes de forme, de matériaux et de fonctions peuvent être partagées par ces deux modes de réalisations, et il saura les utiliser lorsque cela est avantageux.

## Revendications

1. Ustensile comportant une base (4, 104) comprenant un fond (14, 114) et une paroi (16, 116) périphérique reliée audit fond (14, 114) de manière à définir un espace (18, 118), ladite paroi (16, 116) présentant un bord (20, 120) sensiblement opposé audit fond (14, 114) ainsi que deux ouvertures (22-24, 121-122) traversantes au voisinage dudit bord (20, 120) et sensiblement opposées l'une à l'autre, l'ustensile (2, 102) comprenant en outre un récipient (10, 110) adapté pour être logé dans ledit espace (18, 118) et présentant deux tétons (44-46, 144-145) périphériques sensiblement opposés l'un à l'autre et adaptés pour être chacun reçu dans une ouverture (22-24, 121-122) respective desdites ouvertures (22-24, 121-122) traversantes, **caractérisé en ce que** l'une (24, 122) au moins des ouvertures (22-24, 121-122) traversantes débouche sur le bord (20, 120) en une encoche (28, 122) de réception pour un desdits tétons (44, 144), et **en ce que** l'ustensile (2, 102) comprend en outre un dispositif de préhension (6, 106) muni d'une portion d'appui (8, 168) adaptée pour recouvrir au moins en partie le téton (44, 144) qu'elle reçoit, et un élément de fixation (8, 162) adapté pour maintenir le dispositif de préhension (6, 106) dans la position où le téton (44, 144) est au moins partiellement recouvert.

2. Ustensile selon la revendication 1, comprenant en outre une anse (124) périphérique fixée sur ladite paroi au niveau de ladite encoche (122), ladite anse (124) comprenant une découpe (130) correspondante de l'encoche (122) pour recevoir une extrémité dudit téton (144).

3. Ustensile selon la revendication 1 ou 2, dans lequel l'autre (121) ouverture traversante débouche sur le bord (120) en une encoche (121) de réception pour l'autre téton (145), l'ustensile (102) comprenant une anse (123) périphérique fixée sur ladite paroi au niveau de ladite encoche (121), ladite anse (123) comprenant une découpe (129) correspondante de l'encoche (121) pour recevoir une extrémité dudit téton (145).

4. Ustensile selon l'une des revendications précédentes, dans lequel la base (104) présente un bec (134) au niveau du bord (120), et dans lequel le récipient (110) comporte une pièce (148) adaptée pour venir en appui sur ledit bec (134) lorsque le récipient est logé dans la base (104).

5. Ustensile selon la revendication 4, dans lequel la pièce (148) du récipient (110) comporte deux découpes (149, 150) propres à coopérer avec le dispositif de préhension (106) pour manipuler le récipient (110).

6. Ustensile selon la revendication 5, comprenant en outre un couvercle (112) adapté pour venir en appui sur le bord (120), dans lequel les découpes (149, 150) de la pièce (148) du récipient (110) sont disposées dans une partie de la pièce (148) propre à recouvrir le bec (134) entre l'extrémité de celui-ci et l'extrémité dudit couvercle (112).

7. Ustensile selon l'une des revendications précédentes, dans lequel le dispositif de préhension (106) est amovible.

8. Ustensile selon l'une des revendications précédentes, dans lequel l'élément de fixation (162) fonctionne de manière analogue à une pince.

9. Ustensile selon l'une des revendications précédentes, dans lequel le dispositif de préhension (6) est fixe.

10. Ustensile selon l'une des revendications précédentes, dans lequel l'élément de fixation (8) est un manchon (8) comprenant une languette (38) qui recouvre en partie l'encoche (28) dans la position de fixation.

11. Ustensile selon l'une des revendications précédentes, dans lequel le dispositif de préhension (6, 106) est une poignée.

12. Ustensile selon l'une des revendications précédentes, dans lequel le dispositif de préhension (6, 106) comprend une paire d'anses.

13. Ustensile selon l'une des revendications 4 à 6, dans lequel ladite pièce (148) est réalisée avec un décalage au niveau d'un coude formant une fente (151) entre l'extrémité dudit bord (120) et ladite pièce (148).

## Claims

1. Utensil comprising a base (4, 104) having a bottom (14, 114) and a peripheral wall (16, 116) which is joined to said bottom (14, 114) so as to define a space (18, 118), said wall (16, 116) having a rim (20, 120) substantially opposite said bottom (14, 114) as well as two through-openings (22-24, 121-122) in the vicinity of said rim (20, 120) and substantially opposite one another, the utensil (2, 102) further comprising a container (10, 110) which is suitable for being accommodated in said space (18, 118) and has two peripheral lugs (44-46, 144-145) which are substantially opposite one another and are suitable for being received each in a respective opening (22-24, 121-122) of said through-openings (22-24, 121-122), **characterised in that** at least one (24, 122) of the through-openings (22-24, 121-122) opens at the rim (20, 120) in a receiving notch (28, 122) for one of said lugs (44, 144), and **in that** the utensil (2, 102) further comprises a grasping device (6, 106) provided with a support portion (8, 168) suitable for covering at least partially the lug (44, 144) that it receives, and a fixing element (8, 162) suitable for maintaining the grasping device (6, 106) in the position in which the lug (44, 144) is at least partially covered.

2. Utensil according to claim 1, further comprising a peripheral loop handle (124) fixed to said wall in the region of said notch (122), said loop handle (124) having a cut-out (130) corresponding to the notch (122) for receiving one end of said lug (144).

3. Utensil according to claim 1 or 2, in which the other (121) through-opening opens at the rim (120) in a receiving notch (121) for the other lug (145), the utensil (102) comprising a peripheral loop handle (123) fixed to said wall in the region of said notch (121), said loop handle (123) having a cut-out (129) corresponding to the notch (121) for receiving one end of said lug (145).

4. Utensil according to any one of the preceding claims, in which the base (104) has a spout (134) in the region of the rim (120), and in which the container (110) has an element (148) suitable for resting on said spout (134) when the container is housed in the base (104).

5. Utensil according to claim 4, in which the element (148) of the container (110) has two cut-outs (149, 150) capable of cooperating with the grasping device (106) in order to handle the container (110).

6. Utensil according to claim 5, further comprising a lid (112) suitable for resting on the rim (120), in which the cut-outs (149, 150) of the element (148) of the container (110) are arranged in a portion of the element (148) capable of covering the spout (134) between the end thereof and the end of said lid (112).

7. Utensil according to any one of the preceding claims, in which the grasping device (106) is removable.

8. Utensil according to any one of the preceding claims, in which the fixing element (162) operates analogously to pincers.

9. Utensil according to any one of the preceding claims, in which the grasping device (6) is fixed.

10. Utensil according to any one of the preceding claims, in which the fixing element (8) is a sleeve (8) having a tab (38) which covers the notch (28) at least partly in the fixing position.

11. Utensil according to any one of the preceding claims, in which the grasping device (6, 106) is a handle.

12. Utensil according to any one of the preceding claims, in which the grasping device (6, 106) comprises a pair of loop handles.

13. Utensil according to any one of claims 4 to 6, in which said element (148) is formed with a gap in the region of a bend forming a slot (151) between the end of said rim (120) and said element (148).

## Patentansprüche

1. Gerät bestehend aus einer Basis (4, 104) umfassend einen Boden (14, 114) und eine in der Art zur Festlegung eines Raums (18, 118) mit dem Boden (14, 114) verbundene periphere Wand (16, 116), wobei die Wand (116, 116) einen dem Boden (14,114) wesentlich gegenüberliegenden Rand (20, 120) sowie in der Nachbarschaft des Rands (20, 120) zwei wesentlich einander gegenüberliegende Durchgangsöffnungen (22-24, 121-122) aufweist, wobei das Gerät (2, 102) des Weiteren einen zur Unterbringung in dem Raum (18, 118) angepassten Behälter (10, 110) und zwei periphere, wesentlich einander gegenüberliegende und zur Aufnahme eines jeden in einer entsprechenden Öffnung (22-24, 121-122) der Durchgangsöffnungen (22-24, 121-122) angepasste Ansätze (44-46, 144-145) umfasst, **dadurch gekennzeichnet, dass** zumindest eine (22, 122) der Durchgangsöffnungen (22-24, 121-122) in dem Rand (20, 120) in einen Aufnahmeschlitz (28, 122) für einen der Ansätze (44, 144) mündet, und dass das Gerät (2, 102) des Weiteren eine Haltevorrichtung (6, 106), die mit einem zur zumindest teilweisen Überdeckung des durch sie aufgenommenen Ansatzes (44, 144) angepassten Halteteil (8, 168) versehen ist, und ein zur Beibehaltung der Haltevorrichtung (6, 106) in der Position, in der der Ansatz (44, 144) zumindest teilweise überdeckt ist, angepasstes Festlegungselement (8, 162) umfasst.

2. Gerät nach Anspruch 1, des Weiteren umfassend einen an der Wand auf Höhe des Schlitzes (122) befestigten peripheren Henkel (124), wobei der Henkel (124) einen zum Schlitz (122) korrespondierenden Ausschnitt (130) zur Aufnahme einer Extremität des Ansatzes (144) umfasst.

3. Gerät nach einem der Ansprüche 1 oder 2, wobei die andere Durchgangsöffnung (121) in dem Rand (120) in einem Aufnahmeschlitz (121) für den anderen Ansatz (145) mündet, wobei das Gerät (102) einen an der Wand auf Höhe des Schlitzes (121) befestigten peripheren Henkel (123) umfasst und wobei der Henkel (123) einen zum Schlitz (121) korrespondierenden Ausschnitt (129) zur Aufnahme einer Extremität des Ansatzes (145) umfasst.

4. Gerät nach einem der vorhergehenden Ansprüche, wobei die Basis (104) auf Höhe des Rands (120) einen Ausgießer (134) aufweist, und wobei der Behälter (110) ein Teil (148) aufweist, das angepasst ist, in Halt mit dem Ausgießer (134) zu kommen, wenn sich der Behälter in der Basis befindet.

5. Gerät nach Anspruch 4, wobei das Teil (148) des Behälters (110) zwei Ausschnitte (149, 150) aufweist, die geeignet sind, mit der Haltevorrichtung (106) zur Handhabung des Behälters (110) zusammenzuwirken.

6. Gerät nach Anspruch 5, des Weiteren umfassend einen Deckel (112), der angepasst ist, in Halt mit dem Rand (120) zu kommen, wobei die Ausschnitte (149, 150) des Teils (148) des Behälters (110) in einem zum Überdecken des Ausgießers geeigneten Abschnitt des Teils (148) zwischen dessen Extremität und der Extremität des Deckels angeordnet sind.

7. Gerät nach einem der vorhergehenden Ansprüche, wobei die Haltevorrichtung (106) abnehmbar ist.

8. Gerät nach einem der vorhergehenden Ansprüche, wobei das Festlegungselement (162) auf eine zu einer Klemme analogen Weise funktioniert.

9. Gerät nach einem der vorhergehenden Ansprüche, wobei die Haltevorrichtung (6) fixiert ist.

10. Gerät nach einem der vorhergehenden Ansprüche, wobei das Festlegungselement (8) eine Muffe (8) ist, die eine den Schlitz (28) in der Fixierposition teilweise überdeckende Zunge (38) umfasst.

11. Gerät nach einem der vorhergehenden Ansprüche, wobei die Haltevorrichtung (6, 106) ein Handgriff ist.

12. Gerät nach einem der vorhergehenden Ansprüche, wobei die Haltevorrichtung (6, 106) ein Paar Henkel umfasst.

13. Gerät nach einem der Ansprüche 4 bis 6, wobei das Teil (148) mit einem Versatz bezüglich einer einen Spalt (151) bildenden Biegung zwischen der Extremität der Wand (120) und dem Teil (148) gebildet ist.
